# EUROPEAN PATENT SPECIFICATION

(11) **EP 3 869 319 B1**
(45) Date of publication and mention of the grant of the patent: **30.04.2025**
(21) Application number: 20158512.2
(22) Date of filing: 20.02.2020
(51) Int. Cl.: G06F 3/12

(54) **METHOD AND FLATBED PRINTER FOR PRINTING PRINT JOBS ON MEDIA PIECES PLACEABLE ON A FLATBED OF THE FLATBED PRINTER**
VERFAHREN UND FLACHBETTDRUCKER ZUM DRUCKEN VON DRUCKAUFTRÄGEN AUF MEDIENSTÜCKE, DIE AUF EINEM FLACHBETT DES FLACHBETTDRUCKERS PLATZIERBAR SIND
PROCÉDÉ ET IMPRIMANTE À PLAT POUR L'IMPRESSION DE TRAVAUX D'IMPRESSION SUR DES PIÈCES DE SUPPORT POUVANT ÊTRE PLACÉES SUR UN PLATEAU DE L'IMPRIMANTE À PLAT

(43) Date of publication of application: 25.08.2021
(73) Proprietor: Canon Production Printing Holding B.V., 5914 HH Venlo (NL)
(72) Inventor: VULPE, Radu, 5914 HH Venlo (NL); BADITA, Raul D., 5914 HH Venlo (NL)
(74) Representative: Canon Production Printing IP Department

(56) References cited:
- US-A1- 2016 107 468

## Description

### FIELD OF THE INVENTION

The invention relates to a flatbed printer according to claim 1.

The invention also relates to a method for placing a plurality of media pieces on a flatbed area of a flatbed printer according to claim 11.

The invention further relates to a non-transitory recording medium printer according to claim 15.

The print head of the flatbed printer may be mounted on an armature above the flatbed area. The armature may a robot arm to which the print head is attached. The robot arm may move in a plurality of directions over the flatbed area. The armature may be a gantry moving over the flatbed area in a first direction, while the print head is movable along the gantry in a second direction perpendicular to the first direction. In case of a print head having a same width as the flatbed area, the armature may be moving in one direction over the flatbed area, i.e. the first direction. The control unit is connected to the print head for controlling the print head. The control unit is controlling the movement of the print head over the flatbed area and the ejection of recording material towards the flatbed area. The control unit is connected to the print head for controlling the print head height with respect to the flatbed area. The distance from the print head to the flatbed area may be variable in order to allow the printing of pieces of media of different thicknesses.

An example of a flatbed printer is provided in US patent 10275197 B2.

US 2016/107468 describes a flatbed printer comprising a flatbed area which comprises an unprintable area which is out of reach of the print head.

The recording material may be ink, e.g. a UV curable ink. When a UV curable ink is used, the print head is also provided with UV lamps for curing the recording material when ejected on the piece of media placed on the flatbed area. The flatbed area usually has the form of a rectangle, for example of a width of 1.22 m and a length of 1.22 m, or of a width of 1.22 m and a length of 2.44 m.

A piece of media with dimensions smaller or equal to the dimensions of the flatbed area can be placed on the flatbed area. Even a piece of media with dimensions larger than the dimensions of the flatbed area can be placed on the flatbed area and has to be moved to get it completely printed.

Flatbed print systems usually apply recording material, like colorants, on a piece of media placed on the flatbed area in the form of ink according to a digitally defined, two-dimensional pattern of pixels with values that indicate a composition of these colorants. This pattern is generated out of a digital image, that may comprise objects in either vectorized or rasterized format, using conventional techniques like interpretation, rendering, and screening by a raster image processor. The processing of a digital image includes colour management to convert colour values of the pixels in the digital image into composition values related to the printer colour space as is set up by the colorants of the print system. Depending on the intended print quality a print mode may be selected to influence the characteristics of the print process. According to the selected print mode the pixels of the pattern may be printed in a corresponding resolution and in more than one pass, wherein a position of the piece of media on the flatbed area has an opportunity to receive a colorant in one or more of the passes of the print head across the flatbed area. An image to be printed may be delivered to the flatbed printer comprised in a print job which may be submitted by a user or an operator from a work station coupled to the flatbed printer via a digital network connection.

Print jobs may also contain images which have to be printed in multiple layers. For example a first white layer is deposited as a background, a second colour layer is deposited as a colour image to be established and a third varnish layer is deposited in order to protect the second layer.

### BACKGROUND OF THE INVENTION

An operator may place pieces of media on the flatbed area in order to print images from a plurality of print jobs on the pieces according to digital images which have been offered to the control unit by means of submitted print jobs. Positioning of a piece of media must be done very accurate with respect to its position and orientation. The operator usually measures right-angled distances of the piece of media from the edges of the flatbed area by a measuring tool like a measuring cord, a tape-measure or a ruler. Another method to position the media is to align the piece of media with reference rulers which have been printed on the flatbed area beforehand. The operator enters the measured distances by means of an application running on a computer connected to the control unit of the flatbed printer or on the control unit itself. After entering the distances, the operator selects the digital image to be printed on the piece of media and start the printing of the flatbed printer. Therefore the control unit or the computer is provided with a user interface suitable for data entry in general. Nowadays an operator places the media pieces on the flatbed area within his reach.

In case of a large flatbed area, there may be a part of the flatbed area which is not reachable by the operator to lay down media pieces. However, when the operator has scheduled digital images of the at least one print job to be printed on media pieces to be laid down on the flatbed area, the digital images may be scheduled to be printed on media pieces which are to be placed in the part of the flatbed area which is unreachable for the operator.

It is an object of the invention to achieve a method to mitigate the above-mentioned operator problem.

### SUMMARY OF THE INVENTION

According to the present invention this object is achieved by the above-mentioned flatbed printer.

According to an embodiment the unreachable area surrounds and includes the center of the flatbed area.

According to an embodiment the unreachable area is a convex area.

According to an embodiment the flatbed printer comprises a user interface which is configured to display on a digital window a digital representation of the flatbed area which comprises a digital representation of the unreachable area.

According to an embodiment the user interface is configured to display a representation of a media piece of the plurality of media pieces on the digital window and to allow a user operation of dragging and dropping the representation of the media pieces on the digital representation of the flatbed area except on the digital representation of the unreachable area in order to schedule at least part of the at least one print job on the media pieces to be laid down on the flatbed area outside of the unreachable area.

According to an embodiment the print controller is configured to use an automatic nesting option for nesting images of the at least one print job, and the automatic nesting option is configured to place the images of the at least one print job automatically outside the unreachable area.

According to an embodiment the system parameter setting is settable and adaptable by means of the user interface of the flatbed printer.

According to an embodiment the print controller is configured to receive by means of the user interface a value of a length of the operator and/or a value of an arm length of the operator and to calculate the value of the system parameter setting based on the value of the length of the operator and/or the value of the arm length of the operator.

According to an embodiment the system parameter setting is defining the border of the convex area on the flatbed area.

According to an embodiment the print controller is configured to maximize a number of media pieces in the subset of the plurality of media pieces.

The invention also relates to a method for placing a plurality of media pieces to be printed upon on a flatbed area of a flatbed printer, according to claim 11.

According to an embodiment the method comprises the step of maximizing a number of media pieces in the subset of the plurality of media pieces.

According to an embodiment the method comprises the step of automatically nesting images of the at least one print job outside the unreachable area.

According to an embodiment the method comprises the step of the print controller sending printing instructions to the print head for ejecting the recording material on the subset of media pieces which are scheduled to be printed upon and the print head ejecting the recording material on the subset of media pieces which are scheduled to be printed upon.

The invention also relates to a non-transitory recording medium printer according to claim 15.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

Hereinafter the present invention is further elucidated with references to the appended drawings showing non-limiting embodiments and wherein:
- Fig. 1: shows a printing system configured to apply the invented method;
- Fig. 2 - 4: are top views of the flatbed area of the printing system in Fig. 1;
- Fig. 5: is a schematic diagram of a first embodiment of the method according to the invention; and
- Fig. 6: is a schematic diagram of a second embodiment of the method according to the invention.

### DETAILED DESCRIPTION OF EMBODIMENTS

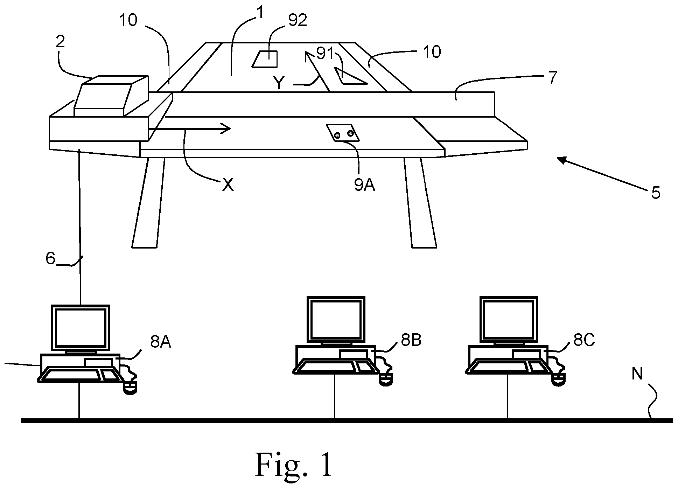

Fig. 1 is a print system 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the print system 5 connected to a print controller of the print system 5 via a connection 6. The print system 5 further comprises a print head 2 attached to an armature 7 for applying colorants, for example cyan (C), magenta (M), yellow (Y), black (K) and white (W) colorant, or varnish to pieces 9, 9A of flat print media placed on a flatbed area 1 in order to obtain a printed image. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while the other pieces 91, 92 are not provided with any recording material yet. The print head 2 reciprocally scans the flatbed area 1 in the second direction X along a gantry 7 perpendicular to a first direction Y of the gantry 7 over the flatbed area 1 along guiding parts 10. During printing of an image on the piece 9, 9A of media the piece 91, 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the pieces of media 91, 92 may have a thickness of 20 mm.

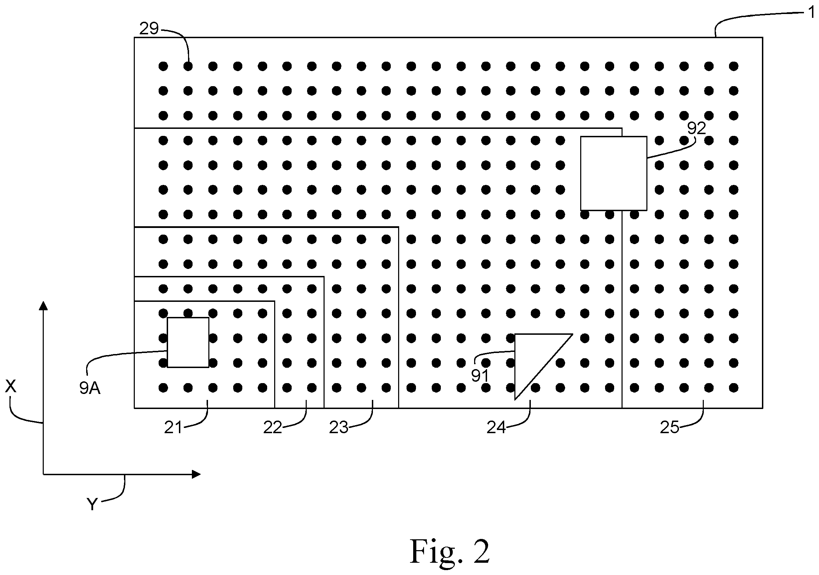

Fig. 2 shows the flatbed area 1 of Fig.1 from a different viewpoint. The flatbed area 1 is provided with a plurality of suction holes 29. A suction hole 29 is connected to at least one underlying suction chamber 21 - 25. The suction chambers 21 - 25 may be closed and opened separately in order to limit and/or expand the air flow to an air flow which is necessary and corresponding to the positions of the media pieces 91, 92, 9A on the flatbed area 1. The number of suction holes, the number of suction chambers, the size of the suction holes, the size of the suction chambers, the geometry of the suction holes and the geometry of the suction chambers in Fig. 2 are exemplary. Other numbers, sizes or geometries may be envisioned.

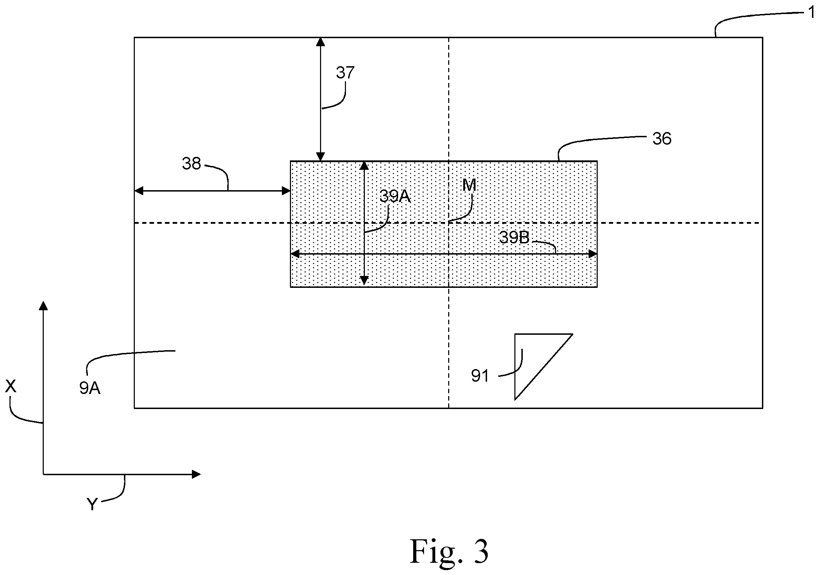

Fig. 3 shows the flatbed area 1 of Fig. 1 again. For convenience reasons the suction holes and the suction chambers are not represented in the flatbed area 1. The print controller 8A (See Fig. 1) is configured to determine a system parameter setting with regard to the flatbed area. The system parameter setting defines an unreachable area 36 of the flatbed area 1 on which no media piece is allowed to be laid down. In Fig. 3 the unreachable area 36 surrounds and includes the center M of the flatbed area 1. The unreachable area 36 is a rectangular area with a width 39A and a length 39B. However, other shapes of the unreachable area may be envisioned for example another kind of convex area. On the left side of the flatbed area 1 the operator can reach over a length 38 for placing media pieces. On the top side of the flatbed area 1 the operator can reach over a length 37 for placing media pieces.

According to an embodiment the print controller has in memory a value of an average length of a human being - for example in a country where the flatbed printer 5 is installed - and/or a value of an average arm length of a human being - for example in the same country. Based on these data values the print controller is able to automatically determine the dimensions of the unreachable area 36.

According to an embodiment at least one of the here-above mentioned values is personalised. Thereto the print controller is configured to receive by means of the user interface a value of a length of the operator who is operating on the flatbed printer 5 and/or a value of an arm length of the same operator and to calculate the value of the system parameter setting for the unreachable area based on the value of the length of the operator and/or the value of the arm length of the operator. In order to let more than one operator work at the flatbed area after each other, for each operator the values may be stored in memory of the print controller. Before the operator is going to work at the flatbed area, he may identify himself via the user interface of the flatbed printer in order to allow the print controller to fetch the corresponding stored personalised values from memory and to use them for determining the dimensions of the unreachable area 36. According to another embodiment the print controller has in memory a plurality of system parameter settings in order to determine the unreachable area. In a further embodiment the print controller is configured to create a digital image of the flatbed area showing the unreachable area based on the system parameter setting. The digital image may be used by the user interface to show, to configure and/or modify the unreachable area by means of an implemented graphical user interface software component.

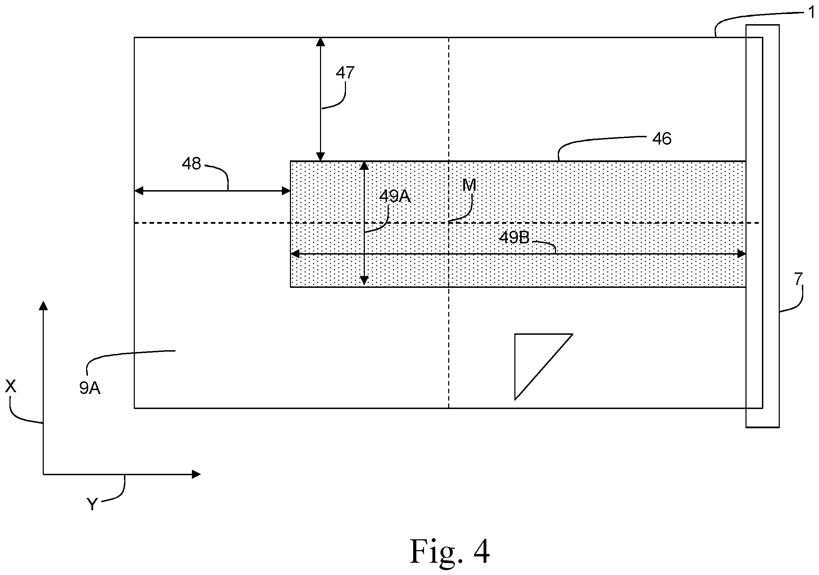

Fig. 4 shows another preferred unreachable area 46 which surrounds and includes the center M of the flatbed area 1. The unreachable area 46 is a rectangular area with a width 49A and a length 49B. The unreachable area 46 extends towards a side of the flat bed area where the armature 7 resides when printing is paused, for example due to print head maintenance or when a print job has ended.

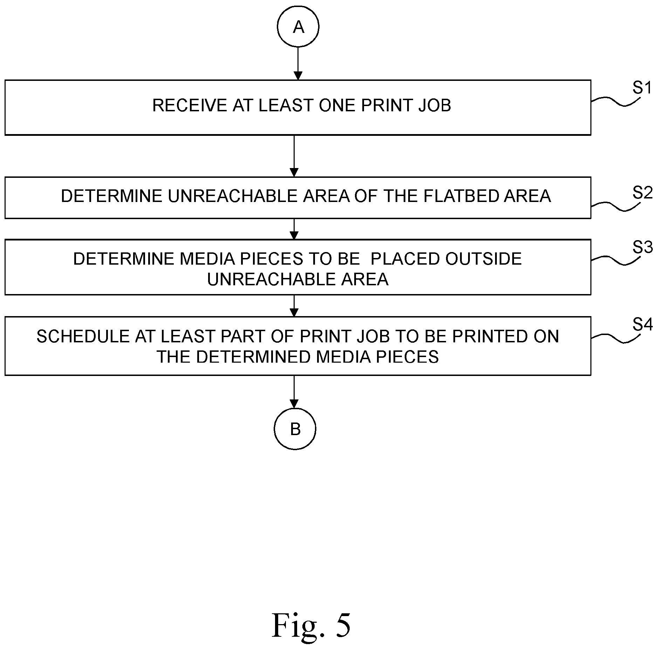

Fig. 5 shows a flow diagram of a first embodiment of the method according to the invention. Starting point of the method is point A. Point A leads to a first step S1.

In the first step S1 the print controller of the flatbed printer receives at least one print job to be printed on the plurality of media pieces.

In a second step S2 the print controller determines a system parameter setting of the flatbed printer with regard to the flat bed area in order to define an unreachable area of the flatbed area on which no media piece is allowed to be laid down.

In a third step S3 the print controller determine based on the system parameter setting a subset of the plurality of media pieces which are entirely placeable on the flatbed area outside the unreachable area.

In a fourth step S4 the print controller schedules at least part of the at least one print job to be printed on the subset of the plurality of media pieces.

The method ends in an endpoint B.

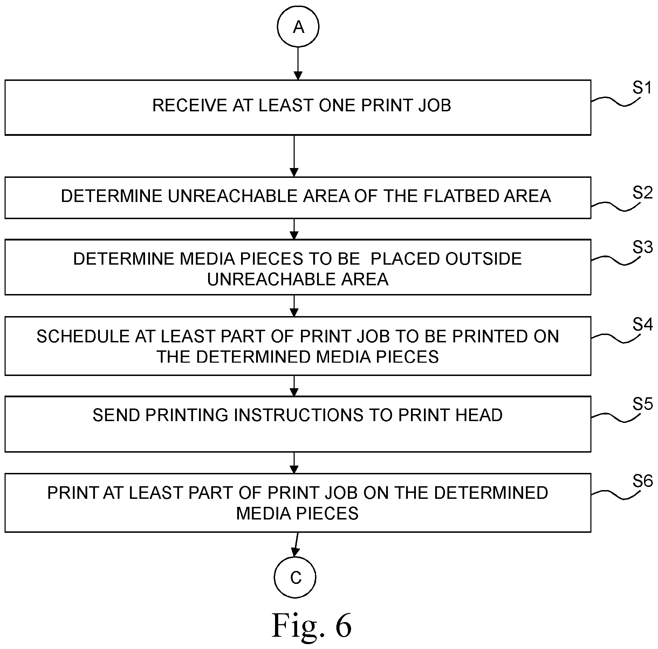

Fig. 6 shows a second embodiment of the method which comprises all steps of the first embodiment shown in Fig. 5 and further steps S5 and S6.

In the fifth step S5 the print controller sends printing instructions to the print head for ejecting the recording material on the subset of media pieces which are scheduled to be printed upon.

In a sixth step S6 the print head ejects the recording material on the subset of media pieces which are scheduled to be printed upon. The printing of the at least one received print job on the plurality of media pieces is established by moving the armature over the flat bed area in at least one direction and ejecting recording material on the plurality of media pieces by means of the print head attached to the armature.

The method ends in an endpoint C.

According to another embodiment the method comprises the step of maximizing a number of media pieces in the subset of the plurality of media pieces. This step can for example be established by a nesting algorithm which automatically schedules images of the at least one print job outside the unreachable area in an optimal nested way.

The above disclosure is intended as merely exemplary, and not to limit the scope of the invention, which is to be determined by reference to the following claims.

## Claims

1. Flatbed printer (5) comprising a flatbed area (1) for placing a plurality of media pieces (91, 92, 9A) to be printed upon, the media pieces (91, 92, 9A) having dimensions smaller than the dimensions of the flatbed area (1), a print controller (8A) for receiving at least one print job to be printed on the plurality of media pieces and controlling the printing of the at least one received print job on the plurality of media pieces, an armature (7) constructed to move over the flatbed area (1) in at least one direction (X, Y), and a print head (2) configured to eject recording material on the plurality of media pieces and attached to the armature,
wherein
the print controller (8A) is configured
to determine a system parameter setting with regard to the flatbed area (1), which system parameter setting (39A, 39B, 37, 38) defines an unreachable area (36) of the flatbed area (1) which is not reachable by the operator to lay down media pieces,
to determine a subset of the plurality of media pieces which are entirely placeable on the flatbed area (1) outside the unreachable area (36), and
to schedule at least part of the at least one print job to be printed on the subset of the plurality of media pieces.

2. Flatbed printer according to claim 1, wherein the unreachable area (36) surrounds and includes the center (M) of the flatbed area (1).

3. Flatbed printer according to claim 2, wherein the unreachable area (1) is a convex area.

4. Flatbed printer according to any of the preceding claims, wherein the flatbed printer (5) comprises a user interface which is configured to display on a digital window a digital representation of the flatbed area (1) which comprises a digital representation of the unreachable area (36).

5. Flatbed printer according to claim 4, wherein the user interface is configured to display a representation of a media piece of the plurality of media pieces on the digital window and to allow a user operation of dragging and dropping the representation of the media pieces on the digital representation of the flatbed area (1) except on the digital representation of the unreachable area (36) in order to schedule at least part of the at least one print job on the media pieces to be laid down on the flatbed area (1) outside of the unreachable area (36).

6. Flatbed printer according to claim 4, wherein the print controller (8A) is configured to use an automatic nesting option for nesting images of the at least one print job, and the automatic nesting option is configured to place the images of the at least one print job automatically outside the unreachable area (36).

7. Flatbed printer according to any of the preceding claims, wherein the system parameter setting is settable and adaptable by means of the user interface of the flatbed printer (5).

8. Flatbed printer according to any of the preceding claims, wherein the print controller (8A) is configured to receive by means of the user interface a value of a length of the operator and/or a value of an arm length of the operator and to calculate the value of the system parameter setting based on the value of the length of the operator and/or the value of the arm length of the operator.

9. Flatbed printer according to claim 3, wherein the system parameter setting is defining the border of the convex area on the flatbed area (1).

10. Flatbed according to any of the preceding claims, wherein the print controller (8A) is configured to maximize a number of media pieces in the subset of the plurality of media pieces by means of a nesting algorithm.

11. Method for placing a plurality of media pieces to be printed upon on a flatbed area (1) of a flatbed printer (5), the media pieces having dimensions smaller than the dimensions of the flatbed area (1), the method comprising the steps of
a) receiving (S1) at least one print job to be printed on the plurality of media pieces,
b) controlling the printing of the at least one received print job on the plurality of media pieces by moving an armature over the flat bed area in at least one direction and ejecting recording material on the plurality of media pieces by means of a print head attached to the armature,
the method **characterized in that** the method comprises the steps of
c) determining (S2) a system parameter setting of the flatbed printer with regard to the flat bed area in order to define an unreachable area of the flatbed area which is not reachable by the operator to lay down media pieces,
d) determining (S3) based on the system parameter setting a subset of the plurality of media pieces which are entirely placeable on the flatbed area outside the unreachable area, and
e) scheduling (S4) at least part of the at least one print job to be printed on the subset of the plurality of media pieces.

12. Method according to claim 11, wherein the method comprises the step of maximizing a number of media pieces in the subset of the plurality of media pieces by means of a nesting algorithm.

13. Method according to any of the claims 11 - 12, wherein the method comprises the step of automatically nesting images of the at least one print job outside the unreachable area.

14. Method according to any of the claims 11 - 13, wherein the method comprises the step of the print controller sending (S5) instructions to the print head for ejecting the recording material on the subset of media pieces which are scheduled to be printed upon and the print head ejecting (S6) the recording material on the subset of media pieces which are scheduled to be printed upon.

15. Non-transitory recording medium comprising computer executable program code configured to, when executed on a computer, perform the steps of the method according to any of the claims 11 - 14.

## Patentansprüche

1. Flachbettdrucker (5) mit einem Flachbettbereich (1) zum Platzieren einer Vielzahl von zu bedruckenden Medienteilen (91, 92, 9A), wobei die Abmessungen der Medienteile (91, 92, 9A) kleiner als die Abmessungen des Flachbettbereichs (1) sind, eine Drucksteuerung (8A) zum Empfangen mindestens eines Druckauftrags, der auf die Vielzahl von Medienteilen zu drucken ist, und zum Steuern des Druckens des mindestens einen empfangenen Druckauftrags auf die Vielzahl von Medienteilen, eine Armatur (7), die so konstruiert ist, dass sie sich über den Flachbettbereich (1) in mindestens einer Richtung (X, Y) bewegt, und einen Druckkopf (2), der so konfiguriert ist, dass er Aufzeichnungsmaterial auf die Vielzahl von Medienteilen auswirft, und der an der Armatur befestigt ist,
wobei
die Drucksteuerung (8A) konfiguriert ist
eine Systemparametereinstellung in Bezug auf den Flachbettbereich (1) zu bestimmen, wobei die Systemparametereinstellung (39A, 39B, 37, 38) einen unerreichbaren Bereich (36) des Flachbettbereichs (1) definiert, der für den Bediener nicht erreichbar ist, um Medienstücke abzulegen
eine Teilmenge der Vielzahl von Medienteilen zu bestimmen, die vollständig auf dem Flachbettbereich (1) außerhalb des unerreichbaren Bereichs (36) platzierbar sind, und
um zumindest einen Teil des mindestens einen Druckauftrags für den Druck auf der Untermenge der Vielzahl von Medienstücken zu planen.

2. Flachbettdrucker nach Anspruch 1, wobei der unerreichbare Bereich (36) die Mitte (M) der Flachbettfläche (1) umgibt und einschließt.

3. Flachbettdrucker nach Anspruch 2, wobei der nicht erreichbare Bereich (1) ein konvexer Bereich ist.

4. Flachbettdrucker nach einem der vorhergehenden Patentansprüche, wobei der Flachbettdrucker (5) eine Benutzerschnittstelle umfasst, die so konfiguriert ist, dass sie auf einem digitalen Fenster eine digitale Darstellung des Flachbettbereichs (1) anzeigt, die eine digitale Darstellung des nicht erreichbaren Bereichs (36) umfasst.

5. Flachbettdrucker nach Anspruch 4, wobei die Benutzerschnittstelle so konfiguriert ist, dass sie eine Darstellung eines Medienteils aus der Vielzahl von Medienteilen auf dem digitalen Fenster anzeigt und eine Benutzeroperation des Ziehens und Ablegens der Darstellung der Medienteile auf der digitalen Darstellung des Flachbettbereichs (1) außer auf der digitalen Darstellung des unerreichbaren Bereichs (36) ermöglicht, um mindestens einen Teil des mindestens einen Druckauftrags auf den Medienteilen zu planen, die auf dem Flachbettbereich (1) außerhalb des unerreichbaren Bereichs (36) abzulegen sind.

6. Flachbettdrucker nach Anspruch 4, wobei die Drucksteuerung (8A) so konfiguriert ist, dass sie eine automatische Verschachtelungsoption zum Verschachteln von Bildern des mindestens einen Druckauftrags verwendet, und die automatische Verschachtelungsoption so konfiguriert ist, dass sie die Bilder des mindestens einen Druckauftrags automatisch außerhalb des nicht erreichbaren Bereichs (36) platziert.

7. Flachbettdrucker nach einem der vorhergehenden Patentansprüche, wobei die Einstellung der Systemparameter über die Benutzeroberfläche des Flachbettdruckers (5) einstellbar und anpassbar ist.

8. Flachbettdrucker nach einem der vorhergehenden Patentansprüche, wobei die Drucksteuerung (8A) so konfiguriert ist, dass sie über die Benutzerschnittstelle einen Wert für die Länge des Bedieners und/oder einen Wert für die Armlänge des Bedieners empfängt und den Wert der Systemparametereinstellung auf der Grundlage des Wertes für die Länge des Bedieners und/oder des Wertes für die Armlänge des Bedieners berechnet.

9. Flachbettdrucker nach Anspruch 3, wobei die Systemparametereinstellung die Grenze des konvexen Bereichs auf der Flachbettfläche (1) definiert.

10. Flachbett nach einem der vorhergehenden Patentansprüche, wobei die Drucksteuerung (8A) so konfiguriert ist, dass sie die Anzahl der Medienstücke in der Teilmenge der Vielzahl von Medienstücken mit Hilfe eines Verschachtelungsalgorithmus maximiert.

11. Verfahren zum Platzieren einer Vielzahl von zu bedruckenden Medienstücken auf einer Flachbettfläche (1) eines Flachbettdruckers (5), wobei die Medienstücke kleinere Abmessungen als die Abmessungen der Flachbettfläche (1) haben, wobei das Verfahren die folgenden Schritte umfasst
a) Empfang (S1) mindestens eines Druckauftrags, der auf die Vielzahl von Medienstücken gedruckt werden soll,
b) Steuern des Druckens des mindestens einen empfangenen Druckauftrags auf die Vielzahl von Medienteilen durch Bewegen einer Armatur über den Flachbettbereich in mindestens eine Richtung und Ausstoßen von Aufzeichnungsmaterial auf die Vielzahl von Medienteilen mittels eines an der Armatur befestigten Druckkopfes,
das Verfahren **dadurch gekennzeichnet ist, dass** das Verfahren die folgenden Schritte umfasst
c) Bestimmen (S2) einer Systemparametereinstellung des Flachbettdruckers in Bezug auf den Flachbettbereich, um einen nicht erreichbaren Bereich des Flachbettbereichs zu definieren, der für den Bediener nicht erreichbar ist, um Medienstücke abzulegen,
d) Bestimmen (S3) einer Teilmenge der Vielzahl von Medienteilen, die vollständig auf dem Flachbettbereich außerhalb des unerreichbaren Bereichs platziert werden können, basierend auf der Systemparametereinstellung, und
e) Planen (S4) mindestens eines Teils des mindestens einen Druckauftrags, der auf die Teilmenge der Vielzahl von Medienstücken gedruckt werden soll.

12. Verfahren nach Anspruch 11, wobei das Verfahren den Schritt der Maximierung einer Anzahl von Medienstücken in der Teilmenge der Vielzahl von Medienstücken mittels eines Verschachtelungsalgorithmus umfasst.

13. Verfahren nach einem der Patentansprüche 11 - 12, wobei das Verfahren den Schritt des automatischen Verschachtelns von Bildern des mindestens einen Druckauftrags außerhalb des nicht erreichbaren Bereichs umfasst.

14. Verfahren nach einem der Patentansprüche 11 - 13, wobei das Verfahren den Schritt umfasst, dass die Drucksteuerung Anweisungen an den Druckkopf sendet (S5), um das Aufzeichnungsmaterial auf die Untermenge von Medienteilen auszuwerfen, die zum Bedrucken vorgesehen sind, und der Druckkopf das Aufzeichnungsmaterial auf die Untermenge von Medienteilen auswirft (S6), die zum Bedrucken vorgesehen sind.

15. Nicht-transitorisches Aufzeichnungsmedium, das einen computerausführbaren Programmcode enthält, der so konfiguriert ist, dass er, wenn er auf einem Computer ausgeführt wird, die Schritte des Verfahrens nach einem der Patentansprüche 11 - 14 durchführt.

## Revendications

1. Imprimante à plat (5) comprenant une zone à plat (1) pour placer une pluralité de supports (91, 92, 9A) à imprimer, les supports (91, 92, 9A) ayant des dimensions inférieures aux dimensions de la zone à plat (1), un contrôleur d'impression (8A) pour recevoir au moins un travail d'impression à imprimer sur la pluralité de supports et commander l'impression du au moins un travail d'impression reçu sur la pluralité de supports, une armature (7) conçue pour se déplacer sur la zone à plat (1) dans au moins une direction (X, Y), et une tête d'impression (2) configurée pour éjecter le matériau d'enregistrement sur la pluralité de supports et attachée à l'armature,
dans laquelle
le contrôleur d'impression (8A) est configuré à
déterminer un réglage des paramètres du système en ce qui concerne la zone à plat (1), lequel réglage des paramètres du système (39A, 39B, 37, 38) définit une zone inaccessible (36) de la zone à plat (1) qui n'est pas accessible à l'opérateur pour déposer des éléments de media,
déterminer un sous-ensemble de la pluralité de supports qui peuvent être entièrement placés sur la surface plane (1) en dehors de la zone inaccessible (36), et
programmer l'impression d'au moins une partie de l'au moins un travail d'impression sur le sous-ensemble de la pluralité de supports.

2. Imprimante à plat selon la revendication 1, dans laquelle la zone inatteignable (36) entoure et inclut le centre (M) de la zone à plat (1).

3. Imprimante à plat selon la revendication 2, dans laquelle la zone inaccessible (1) est une zone convexe.

4. Imprimante à plat selon l'une quelconque des revendications précédentes, dans laquelle l'imprimante à plat (5) comprend une interface utilisateur qui est configurée pour afficher sur une fenêtre numérique une représentation numérique de la zone à plat (1) qui comprend une représentation numérique de la zone inaccessible (36).

5. Imprimante à plat selon la revendications 4, dans laquelle l'interface utilisateur est configurée pour afficher une représentation d'une pièce de média de la pluralité de pièces de média sur la fenêtre numérique et pour permettre une opération utilisateur de glisser-déposer la représentation des pièces de média sur la représentation numérique de la zone à plat (1) sauf sur la représentation numérique de la zone inatteignable (36) afin de programmer au moins une partie de l'au moins un travail d'impression sur les pièces de média à déposer sur la zone à plat (1) à l'extérieur de la zone inatteignable (36).

6. Imprimante à plat selon la revendication 4, dans laquelle le contrôleur d'impression (8A) est configuré pour utiliser une option d'imbrication automatique pour l'imbrication des images de l'au moins un travail d'impression, et l'option d'imbrication automatique est configurée pour placer les images de l'au moins un travail d'impression automatiquement en dehors de la zone inatteignable (36).

7. Imprimante à plat selon l'une quelconque des revendications précédentes, dans laquelle le paramétrage du système est réglable et adaptable au moyen de l'interface utilisateur de l'imprimante à plat (5).

8. Imprimante à plat selon l'une quelconque des revendications précédentes, dans laquelle le contrôleur d'impression (8A) est configuré pour recevoir au moyen de l'interface utilisateur une valeur d'une longueur de l'opérateur et/ou une valeur d'une longueur de bras de l'opérateur et pour calculer la valeur du paramétrage du système en fonction de la valeur de la longueur de l'opérateur et/ou de la valeur de la longueur de bras de l'opérateur.

9. Imprimante à plat selon la revendication 3, dans laquelle le paramétrage du système consiste à définir la bordure de la zone convexe sur la zone à plat (1).

10. Plateau selon l'une quelconque des revendications précédentes, dans lequel le contrôleur d'impression (8A) est configuré pour maximiser un nombre de pièces de support dans le sous-ensemble de la pluralité de pièces de support au moyen d'un algorithme d'imbrication.

11. Méthode pour placer une pluralité de supports à imprimer sur une surface plane (1) d'une imprimante à plat (5), les supports ayant des dimensions inférieures à celles de la surface plane (1), la méthode comprenant les étapes suivantes
a) recevoir (S1) au moins un travail d'impression à imprimer sur la pluralité de supports,
b) commander l'impression d'au moins un travail d'impression reçu sur la pluralité de supports en déplaçant une armature sur la zone du lit plat dans au moins une direction et en éjectant le matériau d'enregistrement sur la pluralité de supports au moyen d'une tête d'impression attachée à l'armature,
la méthode est **caractérisée par le fait qu'**elle comprend les étapes suivantes
c) déterminer (S2) un paramètre système de l'imprimante à plat en ce qui concerne la zone du lit plat afin de définir une zone inaccessible de la zone du lit plat qui n'est pas accessible à l'opérateur pour déposer des supports,
d) déterminer (S3), sur la base du paramétrage du système, un sous-ensemble de la pluralité de supports qui peuvent être entièrement placés sur la surface plane à l'extérieur de la zone inaccessible, et
e) programmer (S4) l'impression d'au moins une partie du travail d'impression sur le sous-ensemble de la pluralité de supports.

12. Procédé selon la revendication 11, dans lequel le procédé comprend l'étape consistant à maximiser un nombre de pièces de média dans le sous-ensemble de la pluralité de pièces de média au moyen d'un algorithme d'imbrication.

13. Procédé selon l'une quelconque des revendications 11 - 12, dans lequel le procédé comprend l'étape d'imbrication automatique des images de l'au moins un travail d'impression en dehors de la zone inatteignable.

14. Procédé selon l'une des revendications 11 - 13, dans lequel le procédé comprend l'étape consistant pour le contrôleur d'impression à envoyer (S5) des instructions à la tête d'impression pour éjecter le matériau d'enregistrement sur le sous-ensemble de supports sur lesquels il est prévu d'imprimer, et pour la tête d'impression à éjecter (S6) le matériau d'enregistrement sur le sous-ensemble de supports sur lesquels il est prévu d'imprimer.

15. Support d'enregistrement non transitoire comprenant un code de programme exécutable par ordinateur configuré pour, lorsqu'il est exécuté sur un ordinateur, effectuer les étapes du procédé selon l'une quelconque des revendications 11 - 14.
